(19) Europäisches Patentamt
European Patent Office
Office européen des brevets

(11) Publication number : 0 221 089 B1

(12) # EUROPEAN PATENT SPECIFICATION

(45) Date of publication of patent specification : 31.07.91 Bulletin 91/31

(51) Int. Cl.[5] : C07F 7/10, C08G 77/54, C08G 77/62

(21) Application number : 86902119.6

(22) Date of filing : 04.03.86

(86) International application number : PCT/US86/00458

(87) International publication number : WO 86/06377 06.11.86 Gazette 86/24

(54) **METHOD OF FORMING COMPOUNDS HAVING Si-N GROUPS AND RESULTING PRODUCTS.**

Divisional application 90122025.1 filed on 04/03/86.

(30) Priority : 26.04.85 US 727415

(43) Date of publication of application : 13.05.87 Bulletin 87/20

(45) Publication of the grant of the patent : 31.07.91 Bulletin 91/31

(84) Designated Contracting States : BE FR IT

(56) References cited :
DE-A- 1 937 932
DE-A- 2 639 286
FR-A- 1 350 220

(56) References cited :
J. Org. Chem. 1983, volume 48,no. 15,1983, Washington, D.C., (US) M.T. Zoeckler et al.:"Homogeneous Catalytic formation of carbon-nitrogen bonds. 2. Catalytic activation of the silicon-nitrogen bond", pages 2539-2543, see pages 2541-2543 (cited in the application)
Organic Preparations and Procedures Int., volume 5, no. 3, 1973 H. Kono et al.:"A convenient route to aminosilanes using hydrosilane-rhodium (I) complex combinations", pages 135-139, see pages 135-138
See also references of WO8606377

(73) Proprietor : SRI INTERNATIONAL
333 Ravenswood Avenue
Menlo Park, California 94025 (US)

(72) Inventor : LAINE, Richard, M.
3866 Corina Court
Palo Alto, CA 94303 (US)
Inventor : BLUM, Yigal
840 Coleman Avenue 15
Menlo Park, CA 94205 (US)

(74) Representative : Rinuy, Santarelli
14, avenue de la Grande Armée
F-75017 Paris (FR)



Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue Saint-Denis, 75001 PARIS

## Description

This application is a continuation-in-part of copending United States Application Serial No. 06/727,414, filed April 26, 1985, entitled "METHOD OF PRODUCING POLYSILAZANES."

The invention relates to the synthesis of compounds (by which it is intended to include monomers, oligomers and polymers) containing the structure Si-N in the molecule. The invention concerns primarily silazanes which are useful to produce ceramic products on pyrolysis but it also relates to compounds which are siloxazanes and/or other compounds containing the Si-N group.

Polysilazanes are useful among other things for the preparation of silicon nitride, $Si_3N_4$, by pyrolysis. Silicon nitride is a hard material and is useful in forming fibers for reinforcement of composite materials. See, for example, (a) Department of Defense Proceedings. Fourth Metal Matrix Composites Technical Conference, May 19-21, 1981, prepared for DOD Metal Matrix Composites Information Analysis Center and (b) J. J. Brennan, "Program to Study SiC Fiber-Reinforced Glass Matrix Composites, Annual Report to Dept. of Navy (Nov. 1980), Contract No. N00014-78-C-0503.

A number of researchers have developed methods of forming polysilazanes, among them Redl and Rochow, who, in Angew. Chemie. (1964) 76, 650 discuss the preparation of polysilazanes by reaction (1)

$$(1)\quad [(CH_3)_2SiNH]_3 \longrightarrow [(CH_3)_2SiNH]_n-$$

Brewer and Haber, J. Am. Chem. Soc. (1948) 70, 3888 and Osthoff and Kantor, Inorg. Syn. (1957) 5, 61 teach the reaction (2)

$$(2)\quad (CH_3)_2SiCl_2 + NH_3 \longrightarrow [(CH_3)_2SiNH]_n + HCl$$

More recent work is described by Markle and others in R. A. Markle, I. Sekercioglu, D. L. Hill, R. R. Wills, and R. G. Sinclair, "Preparation of $Si_xN_yC_z$ Fibers by the Controlled Pyrolysis of Novel Organosilicon Polymeric Precursors", Final Report to NASA, Marshall Flight Center, Alabama, (1981), Contract No. NAS8-33223.

Zoeckler and Laine in J. Org. Chem. (1983) 48, 2539-2541 describe the catalytic activation of the Si-N bond and in particular the ring opening of octamethyl tetrasilazane,

$$[(CH_3)_2SiNH]_4$$

and polymerization of the ring-opened intermediate. Chain termination is effected by introducing $[(CH_3)_3Si]_2NH$ as a co-reactant giving rise to polymers $(CH_3)_3$ Si-$[NHSi(CH_3)_2]_n$-$NHSi(CH_3)_3$ where n may be 1 to 12 or more depending upon the ratio of the chain terminator to the cyclic silazane. The catalyst used was $Ru_3(CO)_{12}$. Other publications are as follows : W. Fink, Helv. Chem. Acta., 49, 1408 (1966) ; Belgian Patent 665774 (1965) ; Netherlands Patent 6,507,996 (1965) ; D. Y. Zhinkis et. al., Rus. Chem. Rev., 49, 2814 (1980) and references 51-58 ; K. A. Andrianov et. al., Dok Akad. Nauk. SSSR, 227, 352 (1976) ; Dok Akad. Nauk. SSSR, 223, 347 (1975) ; L. H. Sommer et. al., JACS 91, 7061 (1969) ; L. H. Sommer, J. Org. Chem. (1967) 32 2470 ; L. H. Sommer et. al., JACS 89, 5797 (1967).

The methods described in the literature cited above and elsewhere have resulted in one or more of the following disadvantages : low yields of polysilazanes coincident with a high yield of cyclomers, lack of control over product selectivity or quality, etc. Often the product is volatile and is therefore difficult to pyrolyze if ceramic materials are desired from the solid or liquid polymer, or if it is solid, it is an intractable material which cannot be readily shaped, if indeed it can be shaped at all. The product is likely to be contaminated with halogen, especially chloride and it may be extensively cross linked and insoluble. In addition, the high ratio of Si to N in the polymers leads to formation of silicon along with $Si_3N_4$ on pyrolysis. In some instances excess carbon and SiC are also produced although they are not always desirable.

It is an object of the invention to provide improved methods of preparing compounds containing the Si-N group.

It is another object to provide methods of preparing compounds containing the Si-N group which permit selective control of the product.

Another object is to provide methods whereby the product of preparing compounds containing the Si-N group can be controlled during synthesis.

Another object is to provide methods whereby the product of preparing compounds containing the Si-N group can be modified after preparation.

Another object is to provide novel compounds containing the Si-N group.

The above and other objects of the invention will be apparent from the ensuing description and the appended claims.

In accordance with the present invention a precursor containing an Si-N group is caused to undergo cleavage of the Si-N bond in the presence of a metal catalyst capable of activating Si-N bonds, such cleavage being carried out in the presence of hydrogen or a hydrogen donor and the cleavage product is caused to produce the desired silazane.

This type of reaction is carried out catalytically using a catalyst which is effective to activate the Si-N bond

Catalysts suitable for carrying out this reaction are metal complexes such as those in Table I which aree homogeneous catalysts that dissolve in the reactants or in a solvent used to dissolve the reactants. Heterogeneous catalysts such as those in Table II may also be used. In general catalysts that activate the Si-N bond may be used.

The reactions are carried out in solution, the solvent being the reactants themselves or an added solvent. Suitable solvents are set forth in Table III. Temperature may range from -78° to 250°, preferably 25° to 150°. (All temperatures are Celsius.)

Table 1, Homogeneous Catalyst

$H_4Ru_4(CO)_{12}$,$Ru_3(CO)_{12}$, $Fe_3(CO)_{12}$, $Rh_6(CO)_{16}$, $Co_2(CO)_8$ $(Ph_3P)$ $_2Rh(CO)H$, $H_2PtCl_6$, nickel cyclooctadiene, $Os_3(CO)_{12}$, $Ir_4(CO)_{12}$, $(Ph_3P)_2Ir(CO)H$, $Pd(OAc)_2$, $Cp_2TiCl_2$, $(Ph_3P)$ $_3RhCl$, $H_2Os_3(CO)_{10}$, $Pd(Ph_3P)_4$, $Fe_3(CO)_{12}/Ru_3(CO)_{12}$ mixtures, also mixtures of metal hydrides.

Table 2, Heterogeneous Catalysts

Pt/C, Pt/$BaSO_4$, Cr, Pd/C, Co/C, Pt black, Co black Pd black, Ir/$Al_2O_3$, Pt/$SiO_2$, Rh/$TiO_2$, Rh/$La_2O_3$, Pd/Ag alloy, $LaNi_5$, $PtO_2$.

Table 3, Solvents

Ethers such as $Et_2O$, $CH_3O$-$CH_2CH_2OCH_3$, THF, halocarbons such as $CHCl_3$, $CH_2Cl_2$, $HClCF_2$, $ClCH_2CH_2Cl$, aromatics such as PhH, $PhCH_3$, Ph-$OCH_3$.

More specifically, the present invention is directed to a

Process for producing a polysilazane containing at least two newly formed Si-N groups by reaction of a precursor containing at least one Si-N group in the presence of a metal catalyst capable of activating Si-N bonds, characterized in that the reaction is carried out in the presence of a hydrogen donor selected from hydrogen, ammonia, a primary amine or a hydrazine and the catalyst is selected from the following homogeneous catalysts

$H_4Ru_4(CO)_{12}$, $Ru_3(CO)_{12}$, $Fe_3(CO)_{12}$, $Rh_6(CO)_{16}$, $Co_2(CO)_8$, $(Ph_3P)$ $_2Rh(CO)H$, $H_2PtCl_6$, nickel cyclooctadiene, $Os_3(CO)_{12}$, $_I r_4(CO)_{12}$, $(PH_3P)_2Ir(CO)H$, $Pd(OAc)_2$, $Cp_2TiCl_2$, $(Ph_3P)$ $_3RhCl$, $H_2Os_3(CO)_{10}$, $Pd(Ph_3P)_4$, $Fe(CO)_{12}/Ru_3(CO_{12}$ mixtures and also mixtures of metal hydrides, or from the following heterogeneous catalysts Pt/C, Pt/$BaSO_4$, Cr, Pd/C, Co/C, pt black, Co black, Pd black, Ir/$Al_2O_3$, Pt/$SiO_2$, Rh/$TiO_2$, Rh/$La_2O_3$, Pd/Ag alloy, $LaNi_5$ and $PtO_2$.

The following specific examples will serve to illustrate the practice and advantages of the invention.

Example 1

To 30 mmol of tetramethyldisilazane (TMDS) are added 25 µmol of $Ru_3(CO)_{12}$ and the solution is heated at 135°C under 80 psi of $NH_3$. TMDS disappears totally after 20 h and polymerization continues for 28 h. The polymeric residue (heavy oil) is 2.44 gm (yield 61 wt%) after distillation at 180°/0.3 mm Hg with a Wt average MW of 764. The major polymeric series is the linear $HSiMe_2[NHSiMe_2]_xNHSiMe_2H$. Also smaller branched chain polymers appear. Molecular weights greater than 2000 can be obtained by varying the reaction conditions.

Example 2

To 20 mmol of TMDS are added 25 µmol of $Ru_3(CO)_{12}$ and the solution is heated at 135°C under 100 psi of $NH_3$. The conversion of TMDS is 94% after 1 h. 0.1 g of hydrazine are added and the solution is heated again

for 3 hours. The GC shows that most of volatile products disappear. The high polymeric residue is 68 wt % after distillation at 180°/0.3 mm Hg. Similar results are achieved by using 200 mg of 5% Pt/C (activated under $H_2$) using identical conditions. The average molecular weight is 1200.

Example 3

To 75 mmol of TMDS are added 25 μmol of $Ru_3(CO)_{12}$ and the solution is heated at 135°C under 60 psi of ammonia. The hydrogen pressure produced in the reaction is released every 1 hour and the reactor is charged again with 60 psi of $NH_3$. TMDS disappears after 5 h. The initial turnover frequency (TF) for TMDS disappearance is 260. The net total turnover number for Si-N bond production is close to 4,480 after 8 hours.

Example 4

To 20 mmol of tetramethyldisilazane (TMDS) and 20 mmol anhydrous hydrazine ($NH_2NH_2$) are added 25 μmol of $Ru_3(CO)_{12}$ and the solution is heated at 135°C under nitrogen. All the TMDS disappears after 3 hours and $H_2$ pressure is obtained (TF = 528). The yield of the polymeric residue after distillation of the volatile products is 75 wt percent. The average molecular weight is 968.

Example 5 Reaction of a Hydridosilazane

$[H_2SiNMe]_x$ (2.0 g ; Mn = 560) and $Ru_3(CO)_{12}$ (16 mg) are heated under several reaction conditions. The results are shown in Table 4. The starting reactant $-[H_2SiNMe]_x-$ is prepared from $H_2SiCl_2$ and $MeNH_2$ in ether solution as reported by Seyferth and Wiseman (Polymer Chem. Div. Preprints ; Paper presented at the spring meeting of ACS, April 1984). The products are $[H_2SiNMe]_4$ and a linear oligomer $HNMe[SiH_2NMe]_x-H$ (x is approximately 10).

**TABLE 4**

| Run | Gas Phase (atm) | Temp. (°C) | Time (hours) | Form of Product | Ceramic Yield (%)[a] (Crystallized form) |
|---|---|---|---|---|---|
| 1 | $H_2$ (1 atm) | 60 | 4 | viscous liquid ($\bar{M}n$-1180; soluble in toluene and $CH_2Cl_2$) | 68 |
| 2 | $H_2$ (1 atm) | 135 | 2 | soft rubber | 75 |
| 3 | $MeNH_2$ (3atm) | 60 | 4 | viscous liquid ($\bar{M}n$ = 1200) | 78 ($\alpha$ $Si_3N_4$)[b] |
| 4[c] | $NH_3$ (8 atm) | 60 | 2 | hard rubber | 85% ($Si_3N_4$; ($\alpha$ > $\beta$) |

a) Pyrolyzed under $N_2$ by ramping the temperature to 900°C in 6 h and then holding for 2 h at 900°C; sintered at 1550-1600°C.

b) Poorly crystallized.

c) Only 8 mg of $Ru_3(CO)_{12}$ were used.

## Example 6 Reaction of Octamethylcyclotetrasilazane

Octamethylcyclotetrasilazane, referred to as <u>1</u>, was reacted under various conditions with (+) and without (-) $[(CH_3)_3Si]_2NH$ and with various catalysts.
Results are set forth in Table 5.

TABLE 5

YIELD OF OLIGOMERS AND POLYMERS

| Run[a] | Catalyst | $[(CH_3)_3Si]_2NH$ | II Conv. (%)[b] | Yield (% Weight)[c] Oligomers | Polymers | M.W. |
|---|---|---|---|---|---|---|
| 1 | $H_2SO_4$ | - | 46 | 33 | 10 | 783 |
| 2 | $H_2SO_4$ | + | 46 | 18 | 33 | 587 |
| 3 | $Ru_3(CO)_{12}/H_2$ | - | 74 | 54 | 18 | 2551 |
| 4 | $Ru_3(CO)_{12}/H_2$ | + | 68 | 28 | 44 | 697 |
| 5 | Pt/C | - | 62 | 22 | 34 | 1080 |
| 6 | Pt/C | + | 71 | 28 | 45 | 784 |

[a]The same conditions as shown in Table 10. The reactions were carried without internal standard and the analyses were made according to the distillation of the solutions.

[b]The conversion measurement is due to the amount of 1 in the end of the reaction.

[c]Yield is in weight percentage due to the total weight of the solution. The oligomer fraction also contains the disilazane $(Me_3Si)_2NH$ which remains.

In the $Ru_3(CO)_{12}$ and $H_2SO_4$ catalysis the conversion of 1 was higher in the absence of $[(CH_3)_3Si]_2NH$ although, in all three catalytic methods, the total weight of polymers obtained is greater when $[(CH_3)_3Si]_2NH$ is added. One must consider the fact that the catalyst also attacks the disilazane Si-N bonds, so the total turnover number for breaking these bonds is greater when $[(CH_3)_3Si]_2NH$ is used.

The average molecular weight analyses show that in spite of the higher yield of polymers there is a decrease in the molecular weight when the capping agent is used. This process can be improved by using higher ratios of 1 to $[(CH_3)_3Si]_2NH$.

The above results strongly suggest that the catalytic reaction approaches an equilibrium. When the reaction, catalyzed by $H_2SO_4$, is run until an equilibrium is achieved and then another equivalent of acid is added, no further reaction is observed.

The volatile oligomers fractions isolated by distillation, when reacted again with the catalyst, produced additional amounts of polymers. The same series of reactions shown in Table 5 are run with hexamethylcyclotrisilazane (2) instead of 1 as the starting material. All of them are reactive, producing the same oligomers and polymers, including 1. That is to say, an equilibrium results and selective separation of products from the equilibrium mixture can be carried out. For example the 1 $\rightleftharpoons$ 2 equilibrium mixture may be distilled, thereby removing the lower boiling components including 2 and driving the reaction to the right.

GC-MS Analysis

Identification of polymer types produced in the reactions described in Table 5 were performed by GC-MS. This method is limited to polymers with molecular weights less than 1000. We have observed types A and B in reaction (1). B is the major product in run 4 (n = 1-8) and A

$$(-Me_2SiNH-)_n \qquad Me_3SiNH(Me_2SiNH)_n-SiMe_3$$

A B

appears in small quantities (n = 3-7). Another set of polymers observed in even smaller quantities are C (n + n' = 2.7) and D (n + n' + n'' + n''' = 2 - 6). C and D are crosslinked through nitrogen groups.

$$-(SiNH)_n-SiN-(SiNH)_{n'}-Si\equiv$$

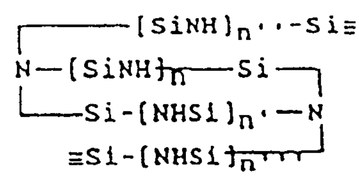

C D

In the above, Si signifies $-SiMe_2-$ and Si = signifies $-SiMe_3$.

In run 3 because of the high molecular weight no significant products could be detected by the GC-MS. Most likely there are more crosslinks from this run which also explains the high molecular weight. Run 6 shows the same types as the parallel reaction with $Ru_3(CO)_{12}$ but the quantities of C and D are larger. The Pt/C catalysis without the capping agent gives series A and other quantitive serie E, F that indicate bi-and tri-cyclo crosslinked compounds.

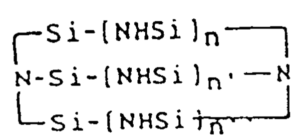

E

F contains another ring. In E, $n_{total}$ (i.e. n + n' + n'') = 5-8 ; in F, $n_{total}$ = 8-9.

The polymers produced by $H_2SO_4$ catalysis contains types A (n = 5,6), B (n = 2-8 ; major products), and C(n = 2-5) in run 2 and A (n = 5-9) in run 4. In both cases the GC-MS analyses show an amount of oxygenated products in which oxygen replaced amine groups.

## Example 7

To 1.8 gr polydimethylsilylhydrazine $[Me_2SiNHNH]_x$ prepared as follows :

$$(CH_3)_2SiCl_2 + NH_2NH_2 \longrightarrow [(CH_3)_2SiNHNH]_n + NH_2NH_3Cl$$

(average MW 1130) dissolved in 5 ml of toluene are added 25 μmol of $Ru_3(CO)_{12}$ and the solution is heated at 135°C under hydrogen. The clear solution turns cloudy and viscous (at room temperature). 1.3 g of a soft solid product is obtained after distillation of the volatile products and solvent at 180°/0.3 mm Hg. The solid has a Wt average MW 1220 and starts to soften at 60°C. The same treatment for the starting material in the absence of catalyst gives a slightly cloudy solution at room temperature (clear during heating). The Wt average MW decreases to 612. The product is a solid after distillation and does not soften up to 250°C.

## Example 8

Octamethylcyclotetrasilazane 1 is reacted with $[(CH_3)_3Si]_2NH$ in the presence of various catalysts. The reaction conditions, catalysts and results are set forth in Table 6.

TABLE 6

| Run | Catalyst | Temp (°C) | Time (h) | Conversion (%) | Decomposition of Catalyst |
|---|---|---|---|---|---|
| 1 | $Ru_3(CO)_{12}$ | 135 | 6 | 22 | a |
| 2 | $Ru_3(CO)_{12}$ | 180 | 15 | 80 | m |
| 3 | $Ru_3(CO)_{12}/H_2$ | 135 | 1 | 78 | -- |
| 4 | $Ru_3(CO)_{12}/H_2O$ | 135 | 3 | 33 | s |
| 5 | $Ru_3(CO)_{12}/Fe(CO)_5$ | 135 | 6 | 26 | s |
| 6 | $Ru_3(CO)_{12}/Fe_3(CO)_{12}$ | 135 | 3 | 80 | a |
| 7 | $Fe_3(CO)_{12}$ | 135 | -- | -- | -- |
| 8 | $Fe_3(CO)_{12}H_2$ | 135 | 3 | 80 | f |
| 9 | $Os_3(CO)_{12}$ | 135 | -- | -- | -- |
| 10 | $Os_3(CO)_{12}$ | 180 | 20 | 78 | -- |
| 11 | $Os_3(CO)_{12}/H_2$ | 135 | 6 | 73 | -- |
| 12 | $H_2OS_3(CO)_{10}$ | 135 | 3 | 78 | -- |
| 13 | $Rh_6(CO)_{16}$ | 135 | 20 | 55 | g |
| 14 | $Rh_6(CO)_{16}/H_2$ | 135 | 3 | 78 | g |
| 15 | $Ir_4(CO)_{12}$ | 135 | -- | -- | -- |
| 16 | $Ir_4(CO)_{12}$ | 180 | 15 | 70 | m |
| 17 | $Ir_4(CO)_{12}/H_2$ | 135 | 3 | 76 | f |
| 18 | Pt/C | 135 | 3 | 75 | -- |
| 19 | $PtO_2$ | 180 | 15 | 25 | -- |
| 20 | Pd/C | 135 | 3 | 78 | -- |

Comments on Table 6 are as follows : The molar ratio of 9, the silazane $[(CH_3)_3Si]_2NH$ and catalyst was 250 :84 :1. The reaction was carried out under hydrogen where indicated, as in Run No. 3, or water in Run No. 4, otherwise under nitrogen. The hydrogen was at 1 atmosphere pressure. The time figures indicate the shortest time in which there was no further conversion of 1. Butyl ether was used as an internal standard for gas chromatographic analysis. In the decomposition of catalyst column, "s" means slow, "m means moderate and "f" means fast. In Run No. 4 the ratio of $Ru_3(CO)_{12}$ to $H_2O$ was 1 :22. In Run No. 18, 200 mg of 5% Pt/C are used and in Run No. 20, 150 mg of 5% Pd/C are used with 4.15 grams of 1.

It will be seen that in the presence of hydrogen (Runs No. 3, 8, 11, 14 and 17) the reaction was much faster and gave significantly higher yields than in comparable runs with nitrogen. The mixed catalyst in Run No.6 resulted in a fast reaction and a high yield even in the absence of hydrogen. In Run No. 12 a nitrogen atmosphere is used. The reaction rate and yield are comparable to Run No. 11 where a hydrogen atmosphere is used, because of the presence of hydrogen in the complex. In Runs Nos. 7, 9 and 15 no appreciable reaction occurred.

Example 9 Reaction of Hexamethylcyclotrisilazane with Ammonia and Hydrogen

A reactor loaded with hexamethylcyclotrisilazane, 2, (4.4 g) and $Ru_3(CO)_{12}$ (16 mg) is pressurized with $NH_3$ (150 psi) and $H_2$ (150 psi), then heated at 135°C for 18 hours. The cyclotrimer is converted in 84% yield to form two major series of products-cyclomers (A ; n = 4-13) and branched cyclomers
(B ; n = 1-6) analyzed by GC-MS.

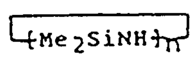

A

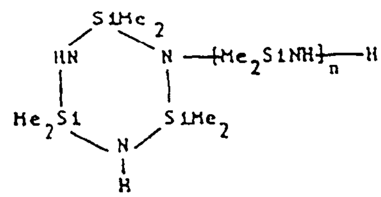

B

Example 10 Copolymerization of Phenylsilane and 1,1,3,3, -tetramethyldisilazane

To a mixture of phenylsilane (4.32 g, 40 mmol) and 1,1,3,3,tetramethyldisilazane (5.32 g, 40 mmol) is added $Ru_3(CO)_{12}$ (16 mg, 25 µmol). The solution is heated at 60° under 150 psi of ammonia. After 5 h, the GC shows high boiling products and the loss of 95% of the starting materials. After 8 hours the reaction temperature is increased to 90°C and after another 2 hours to 135°C. The reaction run for 30 hours. The final result is a viscous oil consisting of a mixture of products. Very little somes off the gc at this point which indicates high molecular weight products. Evaporation of the remaining volatile products (230°/2 mm) leaves a waxy residue. IR, NMR and GC/MS of this product are taken to examine the copolymerization between the two starting substrates. An Si-H bond appears clearly in the IR spectrum but it cannot be observed in the NMR spectrum which is analytically less sensitive. The elemental analysis and the NMR integration suggest that the copolymer contains the following average structure.

$$(PhSiHNH)_{1.3}(Me_2SiNH)_2$$

X

Elemental analysis:

| | C | H | N | Si |
|---|---|---|---|---|
| Calculated for X: | 46.69 | 7.61 | 15.23 | 30.44 |
| Found : | 46.45 | 7.05 | 15.91 | 30.88 |

Example 11 Reaction of 1,2,3,4,5,6 Hexamethylcyclotrisilazane with Ammonia

To 4.39 gr of MeSiH-NMe $_3$ are added 16 mg of $Ru_3(CO)_{12}$ and the solution is heated under 150 psi of ammonia at 60°C. The reactant disappears after 5 hours. The reactor is again charged with ammonia and heated again at 90° for 33 hours. The product is a viscous oil having Mn = 691 which gives 57% yield of ceramic material. GC-MS analysis of the oligomeric fraction indicates the substitution of Si-H groups by Si-NH groups together the substitution of N-Me groups by N-H in the cyclomeric structure.

Example 12 Polymerization of Tetramethyldisilazane in the Presence of Ammonia

(a) To 100.0 mmol of TMDS (13.3 g) are added 50.0 μmol of $Ru_3(CO)_{12}$ (32.0 mg) and the solution is heated under ammonia under various reaction conditions as noted in Table 7. The volatile oligomers were separated from the solution by vacuum distillation (up to 180°/300 μ). The residue is the nonvolatile fraction.

Our initial evaluation of this reaction, using either the homogeneous ruthenium catalyst or activated Pt/C gives cyclomers (n=3-7), linear oligomers, n=2-11), and very small amounts of branched oligomers, (n=1-7 <5%) as evidenced by the GC-MS analyses.

TABLE 7

THE EFFECTS OF TEMPERATURE AND AMMONIA PRESSURE ON PRODUCT SELECTIVITY IN THE REACTION TMDS WITH $NH_3$ IN THE PRESENCE OF $Ru_3(CO)_{12}$

| Run | NH | Temp. ( C) | Time[a] (Hours) | Turnover[b] Frequency THDS Conversion | Si-H Disappearance | Yield of Cyclomers in the volatile fraction (%) Total | Tricyclomer | Nonvolatile Oligomer Yield (%) | Ave. M.W. (Mn) |
|---|---|---|---|---|---|---|---|---|---|
| 1 | 1 | 60 | 66 | 640 | 1000 | 39 | 25 | 19 | 1297 |
| 2 | 1 | 90 | 60 | 720 | 1160 | 34 | 18 | 21 | 1006 |
| 3 | 13 | 60 | 12 | 1220 | 1300 | 88 | .69 | 19 | 2024 |
| 4 | 13 | 90 | 8 | 1960 | 3438 | 91 | 70 | 5 | 1425 |

[a]At these reaction times, the catalyst is still active but the rate of reaction is considerably reduced because of the low Si-H bond concentration.

[b]TF (mol substrate/mol cat/h) based on initial rates, determined by GC (TMDS conversion) and NMR integration (Si-H signal disappearance) referenced to the $CH_3$-Si signals.

GENERAL DISCUSSION

It will be apparent that two general types of reaction occur. In type (a) (cleavage of an Si-N bond, illustrated by Examples 6-9 a ring is opened at an Si-N group to separate the silicon and nitrogen (or an open chain is cleaved at an Si-N group) and the resulting fragment of fragments react with one another and/or with a reactant such as ammonia, an amine, hydrogen, etc.
Where TMDS is reacted with ammonia the resulting product is

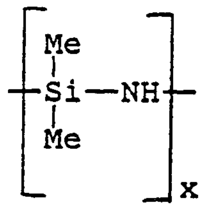

where x is greater than unity. The product is a mixture.

It will be apparent that cleavage of an Si-N group or reaction of Si-H with H-N usually leads to successive reactions which may be cleavage [type (a)] or Si-H + H-N [type (b)] reactions or a mix of both types of reactions. It should also be noted that Si-Si bonds are cleaved under many of the reaction conditions described above resulting in Si-H groups which undergo reaction with H-N groups.

It will therefore be apparent that new and useful methods of preparing oligomers and polymers having Si-N groups have been provided as have new and useful compositions of matter.

**Claims**

1. Process for producing a polysilazane containing at least two newly formed Si-N groups by reaction of a precursor containing at least one Si-N group in the presence of a metal catalyst capable of activating Si-N bonds, characterized in that the reaction is carried out in the presence of a hydrogen donor selected form hydrogen, ammonia, a primary amine or a hydrazine and the catalyst is selected from the following homogeneous catalysts $H_4Ru_4(CO)_{12}$, $Ru_3(CO)_{12}$, $Fe_3(CO)_{12}$, $Rh_6(CO)_{16}$, $Co_2(CO)_8$, $(Ph_3P)_2Rh(CO)H$, $H_2PtCl_6$, nickel cyclooctadiene, $Os_3(CO)_{12}$, $Ir_4(CO)_{12}$, $(PH_3P)_2Ir(CO)H$, $Pd(OAc)_2$, $Cp_2TiCl_2$, $(Ph_3P)_3RhCl$, $H_2Os_3(CO)_{10}$, $Pd(Ph_3P)_4$, $Fe(CO)_{12}/Ru_3(CO_{12}$ mixtures and also mixtures of metal hydrides, or from the following heterogeneous catalysts Pt/C, $Pt/BaSO_4$, Cr, Pd/C, Co/C, Pt black, Co black, Pd black, $Ir/Al_2O_3$, $Pt/SiO_2$, $Rh/TiO_2$, $Rh/La_2O_3$, Pd/Ag alloy, $LaNi_5$ and $PtO_2$.

2. Process according to claim 1, characterized in that the hydrogen donor is selected from hydrogen and ammonia.

3. Process according to claim 2, characterized in that the hydrogen donor is hydrogen.

4. Process according to any one of claims 1 to 3, characterized in that the precursor containing at least one Si-N group is a linear silazane.

5. Process according to any one of claims 1 to 3, characterised in that the precursor containing at least one Si-N group is a cyclic silazane.

6. Process according to any one of the preceding claims characterized in that the reaction is carried out at a temperature comprised between -78 and +250°C and preferably in an organic solvent.

**Patentansprüche**

1. Verfahren zur Herstellung eines mindestens zwei neu gebildete Si-N-Gruppen enthaltenden Polysilazans durch Umsetzung eines mindestens eine Si-N-Gruppe enthaltenden Vorläufers in Gegenwart eines zur Aktivierung von Si-N-Bindungen fähigen Metallkatalysators, **dadurch gekennzeichnet**, daß die Umsetzung in Gegenwart eines aus Wasserstoff, Ammoniak, einem primären Amin oder einem Hydrazin ausgewählten Wasserstoffdonors durchgeführt wird und der Katalysator aus den folgenden homogenen Katalysatoren $H_4Ru_4(CO)_{12}$, $Ru_3(CO)_{12}$, $Fe_3(CO)_{12}$ , $Rh_6(CO)_{16}$, $Co_2(CO)_8$, $(Ph_3P)_2Rh(CO)H$, $H_2PtCl_6$, Nickelcyclooctadien, $Os_3(CO)_{12}$, $Ir_4(CO)_{12}$, $(PH_3P)_2Ir(CO)H$, $Pd(OAc)_2$, $Cp_2TiCl_2$, $(Ph_3P)_3RhCl$, $H_2Os_3(CO)_{10}$, $Pd(Ph_3P)_4$,

$Fe(CO)_{12}/Ru_3(CO)_{12}$-Gemischen und auch aus Gemischen von Metallhydriden oder aus den folgenden heterogenen Katalysatoren Pt/C, Pt/$BaSO_4$, Cr, Pd/C, Co/C, Pt-Schwarz, Co-Schwarz,. Pd-Schwarz, Ir/$Al_2O_3$, Pt/$SiO_2$, Rh/$TiO_2$, Rh/$La_2O_3$, Pd/Ag-Legierung, $LaNi_5$ und $PtO_2$ ausgewählt ist.

2. Verfahren nach Anspruch 1, dadurch gekennzeichnet, daß der Wasserstoffdonor aus Wasserstoff und Ammoniak ausgewählt ist.

3. Verfahren nach Anspruch 2, dadurch gekennzeichnet, daß der Wasserstoffdonor Wasserstoff ist.

4. Verfahren nach einem der Ansprüche 1 bis 3, dadurch gekennzeichnet, daß der mindestens eine Si-N-Gruppe enthaltende Vorläufer ein lineares Silazan ist.

5. Verfahren nach einem der Ansprüche 1 bis 3, dadurch gekennzeichnet, daß der mindestens eine Si-N-Gruppe enthaltende Vorläufer ein cyclisches Silazan ist.

6. Verfahren nach einem der vorhergehenden Ansprüche, dadurch gekennzeichnet, daß die Umsetzung bei einer Temperatur zwischen -78°C und +250°C und vorzugsweise in einem organischen Lösungsmittel durchgeführt wird.

## Revendications

1. Procédé de production d'un polysilazane contenant au moins deux groupes Si-N nouvellement formés, par réaction d'un précurseur contenant au moins un groupe Si-N en présence d'un catalyseur métallique capable d'activer les liaisons Si-N, caractérisé en ce que la réaction est conduite en présence d'un donneur d'hydrogène choisi entre l'hydrogène, l'ammoniac, une amine primaire ou une hydrazine, et le catalyseur est choisi entre les catalyseurs homogènes suivants : $H_4Ru_4(CO)_{12}$, $Ru_3(CO)_{12}$, $Fe_3(CO)_{12}$, $Rh_6(CO)_{16}$, $Co_2(CO)_8$, $(Ph_3P)_2Rh(CO)H$, $H_2PtCl_6$, le nickel-cyclooctadiène, $Os_3(CO)_{12}$, $Ir_4(CO)_{12}$, $(Ph_3P)_2Ir(CO)H$, $Pd(OAc)_2$, $Cp_2TiCl_2$, $(Ph_3P)_3RhCl$, $H_2Os_3(CO)_{10}$, $Pd(Ph_3P)_4$, $Fe(CO)_{12}/Ru_3(CO)_{12}$, ainsi que des mélanges d'hydrures métalliques, ou bien entre les catalyseurs hétérogènes suivants : Pt/C, Pt/$BaSO_4$, Cr, Pd/C, Co/C, le noir de Pt, le noir de Co, le noir de Pd, Ir/$Al_2O_3$, Pt/$SiO_2$, Rh/$TiO_2$, Rh/$La_2O_3$, un alliage Pd/Ag, $LaNi_5$ et $PtO_2$.

2. Procédé suivant la revendication 1, caractérisé en ce que le donneur d'hydrogène est choisi entre l'hydrogène et l'ammoniac.

3. Procédé suivant la revendication 2, caractérisé en ce que le donneur d'hydrogène est l'hydrogène.

4. Procédé suivant l'une quelconque des revendications 1 à 3, caractérisé en ce que le précurseur contenant au moins un groupe Si-N est un silazane linéaire.

5. Procédé suivant l'une quelconque des revendications 1 à 3, caractérisé en ce que le précurseur contenant au moins un groupe Si-N est un silazane cyclique.

6. Procédé suivant l'une quelconque des revendications précédentes, caractérisé en ce que la réaction est conduite à une température de -78 à +250°C et de préférence dans un solvant organique.